# EUROPEAN PATENT SPECIFICATION

(11) **EP 3 424 665 B1**
(45) Date of publication and mention of the grant of the patent: **28.02.2024**
(21) Application number: 18189232.4
(22) Date of filing: 17.11.2015
(51) Int. Cl.: B29B 17/00, B29C 44/50, B29C 48/42, B29C 48/00, B29C 48/10, C08J 11/04, A47G 27/02, D01F 6/62, B29C 48/76, B29B 15/00, B29C 48/36, B29C 48/68, B29K 23/00, B29K 25/00, B29K 27/06

(54) **METHOD FOR MANUFACTURING BULKED CONTINUOUS FILAMENT**
VERFAHREN ZUR HERSTELLUNG VON ENDLOSBAUSCHGARN
PROCÉDÉ DE FABRICATION DE FIL GONFLANT CONTINU

(30) Priority: 18.11.2014 US 201414546837
(43) Date of publication of application: 09.01.2019
(62) Divisional of application: 15861579.9
(73) Proprietor: Aladdin Manufacturing Corporation, Calhoun, GA 30701 (US)
(72) Inventor: Clark, Thomas, Chattanooga, TN 37415 (US)
(74) Representative: Unilin Technologies

(56) References cited:
- WO-A1-2013/180941

## Description

### BACKGROUND

Because pure virgin PET polymer is more expensive than recycled PET polymer, and because of the environmental benefits associated with using recycled polymer, it would be desirable to be able to produce bulked continuous carpet filament from 100% recycled PET polymer (e.g., PET polymer from post-consumer PET bottles).

WO2013/180941 discloses a method to recycle PET waste bottles.

### SUMMARY

The present invention presents a method of recycling polytrimethylene terephthalate according to claim 1.

### BRIEF DESCRIPTION OF THE DRAWINGS

Having described various embodiments in general terms, reference will now be made to the accompanying drawings, which are not necessarily drawn to scale, and wherein:

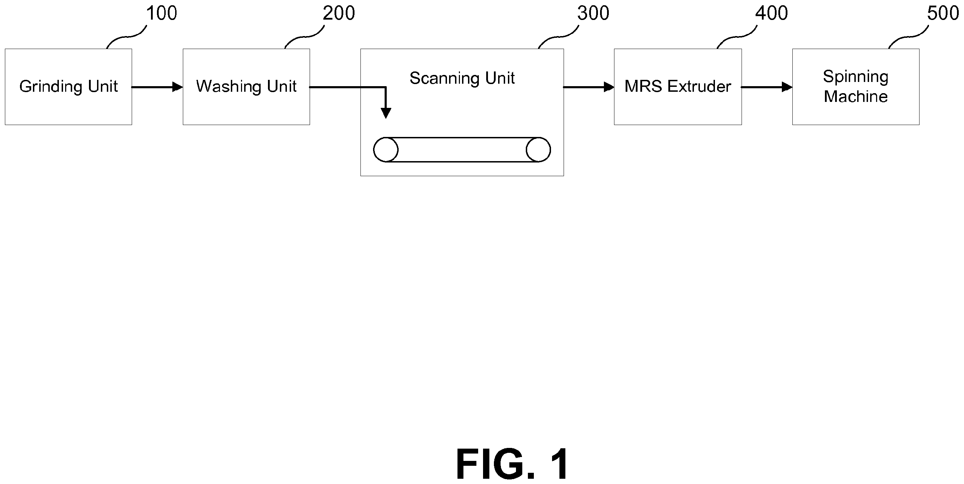

FIG. 1 depicts a process flow, according to a particular embodiment, for manufacturing bulked continuous carpet filament.
FIG. 2 is a perspective view of an MRS extruder that is suitable for use in the process of FIG. 1.
FIG. 3 is a cross-sectional view of an exemplary MRS section of the MRS extruder of FIG. 2.
FIG. 4 depicts a process flow depicting the flow of polymer through an MRS extruder and filtration system according to a particular embodiment.
FIG. 5 is a high-level flow chart of a method, according to various embodiments, of manufacturing bulked continuous carpet filament.

### DETAILED DESCRIPTION OF VARIOUS EMBODIMENTS

Various embodiments will now be described in greater detail. It should be understood that the invention may be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

### I. Overview

New processes for making fiber from recycled polymer (e.g., recycled PET polymer) are described below. In various embodiments, this new process: (1) is more effective than earlier processes in removing contaminates and water from the recycled polymer; and/or (2) does not require the polymer to be melted and cooled as many times as in earlier processes. In at least one embodiment, the improved process results in a recycled PET polymer having a polymer quality that is high enough that the PET polymer may be used in producing bulked continuous carpet filament from 100% recycled PET content (e.g., 100% from PET obtained from previously used PET bottles). In particular embodiments, the recycled PET polymer has an intrinsic viscosity of at least about 0.79 dL/g (e.g., of between about 0.79 dL/g and about 1.00 dL/g).

### II. More Detailed Discussion

A BCF (bulked continuous filament) manufacturing process, according to a particular embodiment, may generally be broken down into three steps: (1) preparing flakes of PET polymer from post-consumer bottles for use in the process; (2) passing the flakes through an extruder that melts the flakes and purifies the resulting PET polymer; and (3) feeding the purified polymer into a spinning machine that turns the polymer into filament for use in manufacturing carpets. These three steps are described in greater detail below.

### STEP 1: Preparing Flakes of PET Polymer from Post-Consumer Bottles

In a particular embodiment, the step of preparing flakes of PET polymer from post-consumer bottles comprises: (A) sorting post-consumer PET bottles and grinding the bottles into flakes; (B) washing the flakes; and (C) identifying and removing any impurities or impure flakes.

### A. Sorting Post-Consumer PET bottles and Grinding the Bottles into Flakes

In particular embodiments, bales of clear and mixed colored recycled post-consumer (e.g., "curbside") PET bottles (or other containers) obtained from various recycling facilities make-up the post-consumer PET containers for use in the process. In other embodiments, the source of the post-consumer PET containers may be returned 'deposit' bottles (e.g., PET bottles whose price includes a deposit that is returned to a customer when the customer returns the bottle after consuming the bottle's contents). The curbside or returned "post-consumer" or "recycled" containers may contain a small level of non-PET contaminates. The contaminants in the containers may include, for example, non-PET polymeric contaminants (e.g., PVC, PLA, PP, PE, PS, PA, etc.), metal (e.g., ferrous and non-ferrous metal), paper, cardboard, sand, glass or other unwanted materials that may find their way into the collection of recycled PET. The non-PET contaminants may be removed from the desired PET components, for example, through one or more of the various processes described below.

In particular embodiments, smaller components and debris (e.g., components and debris greater than 2 inches in size) are removed from the whole bottles via a rotating trammel. Various metal removal magnets and eddy current systems may be incorporated into the process to remove any metal contaminants. Near Infra-Red optical sorting equipment such as the NRT Multi Sort IR machine from Bulk Handling Systems Company of Eugene, Oregon, or the Spyder IR machine from National Recovery Technologies of Nashville, Tennessee, may be utilized to remove any loose polymeric contaminants that may be mixed in with the PET flakes (e.g., PVC, PLA, PP, PE, PS, and PA). Additionally, automated X-ray sorting equipment such as a VINYLCYCLE machine from National Recovery Technologies of Nashville, Tennessee may be utilized to remove remaining PVC contaminants.

In particular embodiments, a binary segregation of the clear materials from the colored materials is achieved using automated color sorting equipment equipped with a camera detection system (e.g., an Multisort ES machine from National Recovery Technologies of Nashville, Tennessee). In various embodiments, manual sorters are stationed at various points on the line to remove contaminants not removed by the sorter and any colored bottles. In particular embodiments, the sorted material is taken through a granulation step (e.g., using a 50B Granulator machine from Cumberland Engineering Corporation of New Berlin, Wisconsin) to size reduce (e.g., grind) the bottles down to a size of less than one half of an inch. In various embodiments, the bottle labels are removed from the resultant "dirty flake" (e.g., the PET flakes formed during the granulation step) via an air separation system prior to entering the wash process.

### B. Washing the Flakes

In particular embodiments, the "dirty flake" is then mixed into a series of wash tanks. As part of the wash process, in various embodiments, an aqueous density separation is utilized to separate the olefin bottle caps (which may, for example, be present in the "dirty flake" as remnants from recycled PET bottles) from the higher specific gravity PET flakes. In particular embodiments, the flakes are washed in a heated caustic bath to about 87.8°C (190 degrees Fahrenheit). In particular embodiments, the caustic bath is maintained at a concentration of between about 0.6% and about 1.2% sodium hydroxide. In various embodiments, soap surfactants as well as defoaming agents are added to the caustic bath, for example, to further increase the separation and cleaning of the flakes. A double rinse system then washes the caustic from the flakes.

In various embodiments, the flake is centrifugally dewatered and then dried with hot air to at least substantially remove any surface moisture. The resultant "clean flake" is then processed through an electrostatic separation system (e.g., an electrostatic separator from Carpco, Inc. of Jacksonville, Florida) and a flake metal detection system (e.g., an MSS

Metal Sorting System) to further remove any metal contaminants that remain in the flake. In particular embodiments, an air separation step removes any remaining label from the clean flake. In various embodiments, the flake is then taken through a flake color sorting step (e.g., using an OPTIMIX machine from TSM Control Systems of Dundalk, Ireland) to remove any remaining color contaminants remaining in the flake. In various embodiments, an electro-optical flake sorter based at least in part on Raman technology (e.g., a Powersort 200 from Unisensor Sensorsysteme GmbH of Karlsruhe, Germany) performs the final polymer separation to remove any non-PET polymers remaining in the flake. This step may also further remove any remaining metal contaminants and color contaminants.

In various embodiments, the combination of these steps delivers substantially clean (e.g., clean) PET bottle flake comprising less than about 50 parts per million PVC (e.g., 25 ppm PVC) and less than about 15 parts per million metals for use in the downstream extrusion process described below.

### C. Identifying and Removing Impurities and Impure Flakes

In particular embodiments, after the flakes are washed, they are fed down a conveyor and scanned with a high-speed laser system **300.** In various embodiments, particular lasers that make up the high-speed laser system **300** are configured to detect the presence of particular contaminates (e.g., PVC or Aluminum). Flakes that are identified as not consisting essentially of PET may be blown from the main stream of flakes with air jets. In various embodiments, the resulting level of non-PET flakes is less than 25 ppm.

In various embodiments, the system is adapted to ensure that the PET polymer being processed into filament is substantially free of water (e.g., entirely free of water). In a particular embodiment, the flakes are placed into a pre-conditioner for between about 20 and about 40 minutes (e.g., about 30 minutes) during which the pre-conditioner blows the surface water off of the flakes. In particular embodiments, interstitial water remains within the flakes. In various embodiments, these "wet" flakes (e.g., flakes comprising interstitial water) may then be fed into an extruder (e.g., as described in Step 2 below), which includes a vacuum setup designed to remove - among other things - the interstitial water that remains present in the flakes following the quick-drying process described above.

### STEP 2: Using an Extrusion System to Melt and Purify PET Flakes

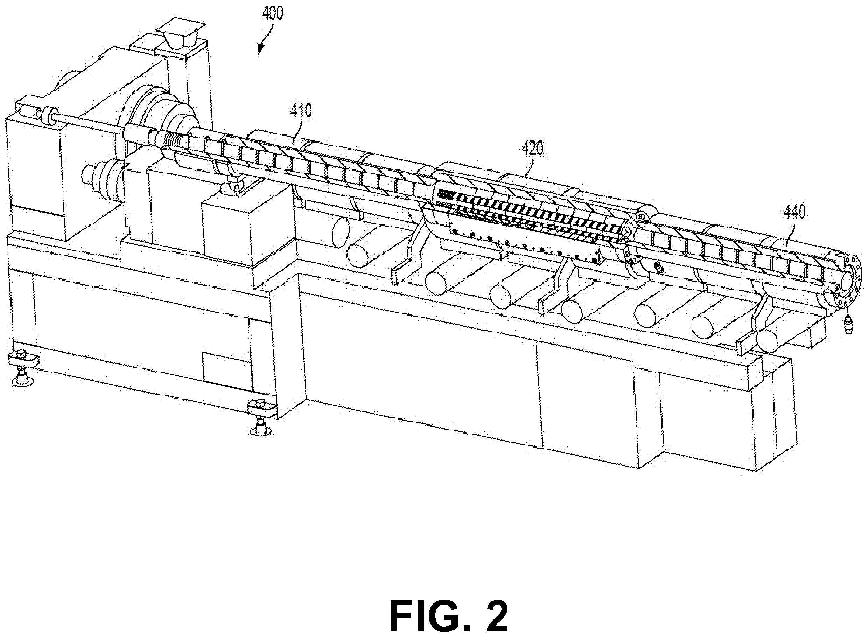

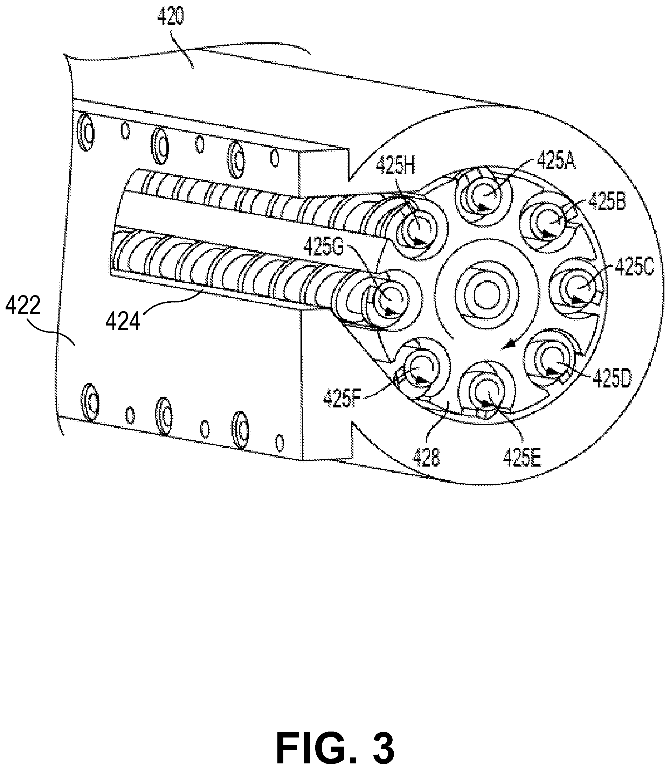

In particular embodiments, an extruder is used to turn the wet flakes described above into a molten recycled PET polymer and to perform a number of purification processes to prepare the polymer to be turned into BCF for carpet. As noted above, in various embodiments, after STEP 1 is complete, the recycled PET polymer flakes are wet (e.g., surface water is substantially removed (e.g., fully removed) from the flakes, but interstitial water remains in the flakes). In particular embodiments, these wet flakes are fed into a Multiple Rotating Screw ("MRS") extruder **400.** In other embodiments, the wet flakes are fed into any other suitable extruder (e.g., a twin screw extruder, a multiple screw extruder, a planetary extruder, or any other suitable extrusion system). An exemplary MRS Extruder **400** is shown in Figures 2 and 3. A particular example of such an MRS extruder is described in U.S. Published Patent Application 2005/0047267, entitled "Extruder for Producing Molten Plastic Materials", which was published on March 3, 2005.

As may be understood from this figure, in particular embodiments, the MRS extruder includes a first single-screw extruder section **410** for feeding material into an MRS section **420** and a second single-screw extruder section **440** for transporting material away from the MRS section.

In various embodiments, the wet flakes are fed directly into the MRS extruder **400** substantially immediately (e.g., immediately) following the washing step described above (e.g., without drying the flakes or allowing the flakes to dry). In particular embodiments, a system that feeds the wet flakes directly into the MRS Extruder **400** substantially immediately (e.g., immediately) following the washing step described above may consume about 20% less energy than a system that substantially fully pre-dries the flakes before extrusion (e.g., a system that pre-dries the flakes by passing hot air over the wet flakes for a prolonged period of time). In various embodiments, a system that feeds the wet flakes
directly into the MRS Extruder **400** substantially immediately (e.g., immediately) following the washing step described above avoids the need to wait a period of time (e.g., up to eight hours) generally required to fully dry the flakes (e.g., remove all of the surface and interstitial water from the flakes).

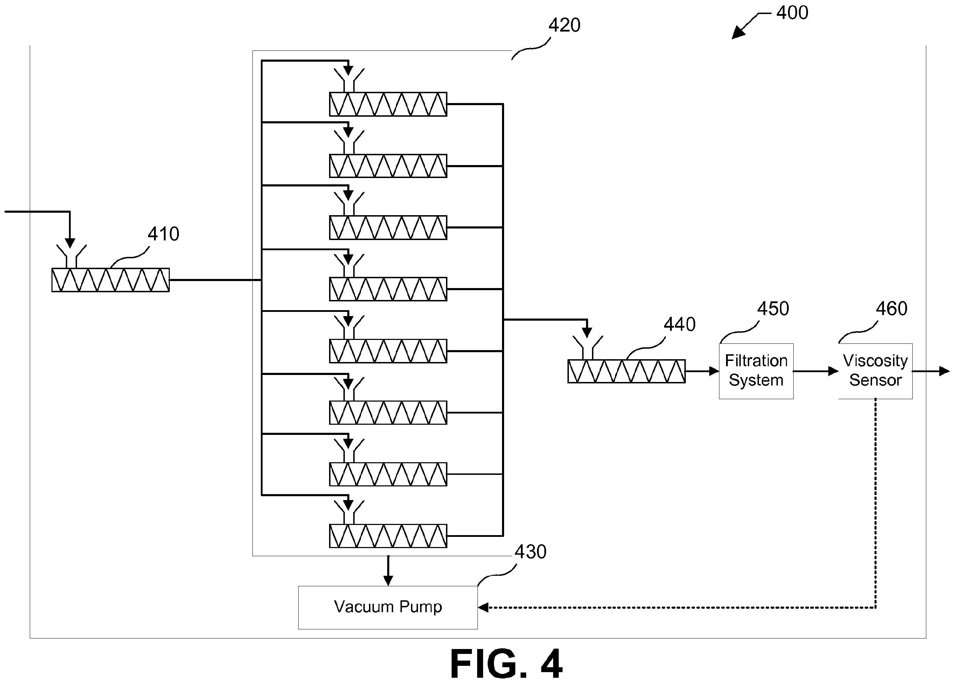

Figure 4 depicts a process flow that illustrates the various processes performed by the MRS Extruder **400** in a particular embodiment. In the embodiment shown in this figure, the wet flakes are first fed through the MRS extruder's first single-screw extruder section **410,** which may, for example, generate sufficient heat (e.g., via shearing) to at least substantially melt (e.g., melt) the wet flakes.

The resultant polymer melt (e.g., comprising the melted flakes), in various embodiments, is then fed into the extruder's MRS section **420,** in which the extruder separates the melt flow into a plurality of different streams (e.g., 4, 6, 8, or more streams) through a plurality of open chambers. Figure 3 shows a detailed cutaway view of an MRS Section **420** according to a particular embodiment. In particular embodiments, such as the embodiment shown in this figure, the MRS Section **420** separates the melt flow into eight different streams, which are subsequently fed through eight satellite screws **425A-H.** As may be understood from Figure 2, in particular embodiments, these satellite screws are substantially parallel (e.g., parallel) to one other and to a primary screw axis of the MRS Machine **400.**

In the MRS section **420,** in various embodiments, the satellite screws **425A-H** may, for example, rotate faster than (e.g., about four times faster than) in previous systems. As shown in Figure 3, in particular embodiments: (1) the satellite screws **425A-H** are arranged within a single screw drum **428** that is mounted to rotate about its central axis; and (2) the satellite screws **425A-H** are configured to rotate in a direction that is opposite to the direction in which the single screw drum rotates **428.** In various other embodiments, the satellite screws **425A-H** and the single screw drum **428** rotate in the same direction. In particular embodiments, the rotation of the satellite screws **425A-H** is driven by a ring gear. Also, in various embodiments, the single screw drum **428** rotates about four times faster than each individual satellite screw **425A-H**. In certain embodiments, the satellite screws **425A-H** rotate at substantially similar (e.g., the same) speeds.

In various embodiments, as may be understood from Figure 4, the satellite screws **425A-H** are housed within respective extruder barrels, which may, for example be about 30% open to the outer chamber of the MRS section 420. In particular embodiments, the rotation of the satellite screws **425A-H** and single screw drum **428** increases the surface exchange of the polymer melt (e.g., exposes more surface area of the melted polymer to the open chamber than in previous systems). In various embodiments, the MRS section **420** creates a melt surface area that is, for example, between about twenty and about thirty times greater than the melt surface area created by a co-rotating twin screw extruder. In a particular embodiment, the MRS section **420** creates a melt surface area that is, for example, about twenty five times greater than the melt surface area created by a co-rotating twin screw extruder.

In various embodiments, the MRS extruder's MRS Section **420** is fitted with a Vacuum Pump **430** that is attached to a vacuum attachment portion **422** of the MRS section **420** so that the Vacuum Pump **430** is in communication with the interior of the MRS section via a suitable opening **424** in the MRS section's housing. In still other embodiments, the MRS Section **420** is fitted with a series of Vacuum Pumps. In particular embodiments, the Vacuum Pump **430** is configured to reduce the pressure within the interior of the MRS Section **420** to a pressure that is between about 0.5 millibars and about 5 millibars. In particular embodiments, the Vacuum Pump **430** is configured to reduce the pressure in the MRS Section **420** to less than about 1.5 millibars (e.g., about 1 millibar or less). The low-pressure vacuum created by the Vacuum Pump **430** in the MRS Section **420** may remove, for example: (1) volatile organics present in the melted polymer as the melted polymer passes through the MRS Section **420;** and/or (2) at least a portion of any interstitial water that was present in the wet flakes when the wet flakes entered the MRS Extruder **400.** In various embodiments, the low-pressure vacuum removes substantially all (e.g., all) of the water and contaminants from the polymer stream.

In a particular example, the Vacuum Pump **430** comprises three mechanical lobe vacuum pumps (e.g., arranged in series) to reduce the pressure in the chamber to a suitable level (e.g., to a pressure of about 1.0 millibar). In other embodiments, rather than the three mechanical lobe vacuum pump arrangement discussed above, the Vacuum Pump **430** includes a jet vacuum pump fit to the MRS extruder. In various embodiments, the jet vacuum pump is configured to achieve about 1 millibar of pressure in the interior of the MRS section **420** and about the same results described above regarding a resulting intrinsic viscosity of the polymer melt. In various embodiments, using a jet vacuum pump can be advantageous because jet vacuum pumps are steam powered and therefore substantially self-cleaning (e.g., self-cleaning), thereby reducing the maintenance required in comparison to mechanical lobe pumps (which may, for example, require repeated cleaning due to volatiles coming off and condensing on the lobes of the pump). In a particular embodiment, the Vacuum Pump **430** is a jet vacuum pump is made by Arpuma GmbH of Bergheim, Germany.

In particular embodiments, after the molten polymer is run the through the multi-stream MRS Section **420,** the streams of molten polymer are recombined and flow into the MRS extruder's second single screw section **440.** In various embodiments, the single stream of molten polymer is next run through a filtration system **450** that includes at least one filter. In a particular embodiment, the filtration system **450** includes two levels of filtration (e.g., a 40 micron screen filter followed by a 25 micron screen filter). Although, in various embodiments, water and volatile organic impurities are removed during the vacuum process as discussed above, particulate contaminates such as, for example, aluminum particles, sand, dirt, and other contaminants may remain in the polymer melt. Thus, this filtration step may be advantageous in removing particulate contaminates (e.g., particulate contaminates that were not removed in the MRS Section **420**)**.**

In particular embodiments, a viscosity sensor **460** (see Figure 4) is used to sense the melt viscosity of the molten polymer stream following its passage through the filtration system **450.** In various embodiments, the viscosity sensor **460,** measures the melt viscosity of the stream, for example, by measuring the stream's pressure drop across a known area. In particular embodiments, in response to measuring an intrinsic viscosity of the stream that is below a predetermined level (e.g., below about 0.8 g/dL), the system may: (1) discard the portion of the stream with low intrinsic viscosity; and/or (2) lower the pressure in the MRS Section **420** in order to achieve a higher intrinsic viscosity in the polymer melt. In particular embodiments, decreasing the pressure in the MRS Section **420** is executed in a substantially automated manner (e.g., automatically) using the viscosity sensor in a computer-controlled feedback control loop with the vacuum section **430.**

In particular embodiments, removing the water and contaminates from the polymer improves the intrinsic viscosity of the recycled PET polymer by allowing polymer chains in the polymer to reconnect and extend the chain length. In particular embodiments, following its passage through the MRS Section **420** with its attached Vacuum Pump **430,** the recycled polymer melt has an intrinsic viscosity of at least about 0.79 dL/g (e.g., of between about 0.79 dL/g and about 1.00 dL/g). In particular embodiments, passage through the low pressure MRS Section **420** purifies the recycled polymer melt (e.g., by removing the contaminants and interstitial water) and makes the recycled polymer substantially structurally similar to (e.g., structurally the same as) pure virgin PET polymer. In particular embodiments, the water removed by the vacuum includes both water from the wash water used to clean the recycled PET bottles as described above, as well as from unreacted water generated by the melting of the PET polymer in the single screw heater **410** (e.g., interstitial water). In particular embodiments, the majority of water present in the polymer is wash water, but some percentage may be unreacted water.

In particular embodiments, the resulting polymer is a recycled PET polymer (e.g., obtained 100% from post-consumer PET products, such as PET bottles or containers) having a polymer quality that is suitable for use in producing PET carpet filament using substantially only (e.g., only) PET from recycled PET products.

### Step 3: Purified PET Polymer Fed into Spinning Machine to be Turned into Carpet Yarn

In particular embodiments, after the recycled PET polymer has been extruded and purified by the above-described extrusion process, the resulting molten recycled PET polymer is fed directly into a BCF (or "spinning") machine **500** that is configured to turn the molten polymer into bulked continuous filament. For example, in various embodiments, the output of the MRS extruder **400** is connected substantially directly (e.g., directly) to the input of the spinning machine **500** so that molten polymer from the extruder is fed directly into the spinning machine **500.** This process may be advantageous because molten polymer may, in certain embodiments, not need to be cooled into pellets after extrusion (as it would need to be if the recycled polymer were being mixed with virgin PET polymer). In particular embodiments, not cooling the recycled molten polymer into pellets serves to avoid potential chain scission in the polymer that might lower the polymer's intrinsic viscosity.

In particular embodiments, the spinning machine **500** extrudes molten polymer through small holes in a spinneret in order to produce carpet yarn filament from the polymer. In particular embodiments, the molten recycled PET polymer cools after leaving the spinneret. The carpet yarn is then taken up by rollers and ultimately turned into filaments that are used to produce carpet. In various embodiments, the carpet yarn produced by the spinning machine **500** may have a tenacity between about 3 gram-force per unit denier (gf/den) and about 9 gf/den. In particular embodiments, the resulting carpet yarn has a tenacity of at least about 3 gf/den.

In particular embodiments, the spinning machine **500** used in the process described above is the Sytec One spinning machine manufactured by Oerlika Neumag of Neumuenster, Germany. The Sytec One machine may be especially adapted for hard-to-run fibers, such as nylon or solution-dyed fibers, where the filaments are prone to breakage during processing. In various embodiments, the Sytec One machine keeps the runs downstream of the spinneret as straight as possible, uses only one threadline, and is designed to be quick to rethread when there are filament breaks.

Although the example described above describes using the Sytec One spinning machine to produce carpet yarn filament from the polymer, it should be understood that any other suitable spinning machine may be used. Such spinning machines may include, for example, any suitable one-threadline or three-threadline spinning machine made by Oerlika Neumag of Neumuenster, Germany or any other company.

In various embodiments, the improved strength of the recycled PET polymer generated using the process above allows it to be run at higher speeds through the spinning machine **500** than would be possible using pure virgin PET polymer. This may allow for higher processing speeds than are possible when using virgin PET polymer.

### Summary of Exemplary Process

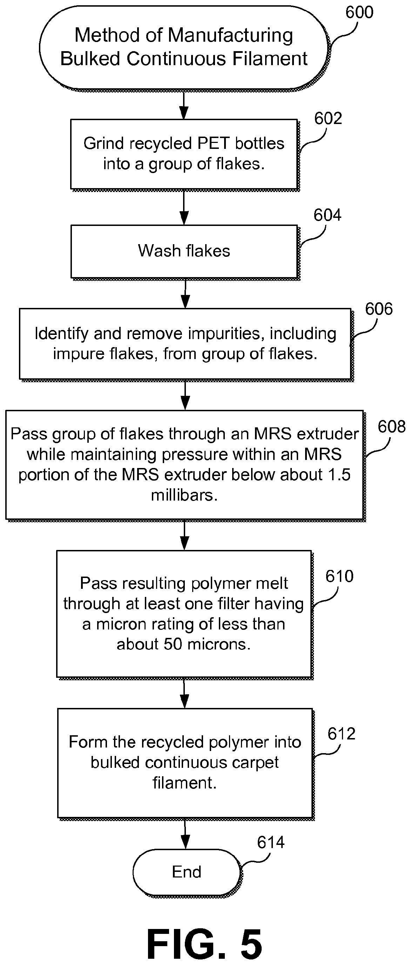

Figure 5 provides a high-level summary of the method of manufacturing bulked continuous filament described above. As shown in the figure, the method begins at Step **602,** where recycled PET bottles are ground into a group of flakes. Next, at Step **604,** the group of flakes is washed to remove contaminants from the flakes' respective outer surfaces. Next, at Step **606,** the group of flakes is scanned (e.g., using one or more of the methods discussed above) to identify impurities, including impure flakes. These impurities, and impure flakes, are then removed from the group of flakes.

Next, at Step **608,** the group of flakes is passed through an MRS extruder while maintaining the pressure within an MRS portion of the extruder below about 1.5 millibars. At Step **610,** the resulting polymer melt is passed through at least one filter having a micron rating of less than about 50 microns. Finally, at Step **612,** the recycled polymer is formed into bulked continuous carpet filament, which may be used in producing carpet. The method then ends at Step **614.**

### Alternative Embodiments

In particular embodiments, the system may comprise alternative components or perform alternative processes in order to produce substantially continuous BCF from 100% recycled PET, or other recycled polymer. Exemplary alternatives are discussed below.

### Non-MRS Extrusion System

In particular embodiments, the process may utilize a polymer flow extrusion system other than the MRS Extruder described above. The alternative extrusion system may include for example, a twin screw extruder, a multiple screw extruder, a planetary extruder, or any other suitable extrusion system. In a particular embodiment, the process may include a plurality of any combination of any suitable conical screw extruders (e.g., four twin screw extruders, three multiple screw extruders, etc.).

### Making Carpet Yarn from 100% Recycled Carpet

In particular embodiments, the process described above may be adapted for processing and preparing old carpet (or any other suitable post-consumer product) to produce new carpet yarn comprising 100% recycled carpet. In such embodiments, the process would begin by grinding and washing recycled carpet rather than recycled PET bottles. In various embodiments where old carpet is converted into new carpet yarn comprising 100% recycled carpet, the process may comprise additional steps to remove additional materials or impurities that may be present in recycled carpet that may not be present in recycled PET bottles (e.g., carpet backing, adhesive, etc.).

### Other Sources of Recycled PET

In various embodiments, the process described above is adapted for processing recycled PET from any suitable source (e.g., sources other than recycled bottles or carpet) to produce new carpet yarn comprising 100% recycled PET.

### The Use of a Crystallizer as Part of BCF Process

In various embodiments, the process for producing recycled BCF may further include a crystallizing step that utilizes one or more PET crystallizers. In particular embodiments, the system is configured to perform the crystallization step on the ground flakes prior to running the flakes through the one or more extruders (e.g., single screw extruder, MRS extruder, etc.). In particular embodiments, the PET crystallizer comprises a housing, a hopper screw (e.g., an auger) disposed at least partially within the housing, a stirring apparatus, one or more heating elements, and one or more blowers.

### Hopper Screw

In particular embodiments, the hopper screw comprises any suitable screw conveyor (e.g., such as an Archimedes' screw) for moving liquid or granular materials (e.g., such as PET flakes). In various embodiments, the hopper screw comprises a substantially cylindrical shaft and a helical screw blade disposed along at least a portion of the cylindrical shaft. In particular embodiments, the substantially cylindrical shaft is configured to rotate the screw blade, causing that hopper screw to move material (e.g., the PET flakes) along the cylindrical shaft and into the crystallizer housing. In other embodiments, the hopper screw comprises any other suitable screw conveyer such as, for example, a shaftless spiral. In embodiments in which the hopper screw comprises a shaftless spiral, the shaftless spiral may be substantially fixed at one end and free at the other end and configured to be driven at the fixed end. In various embodiments, the hopper screw is disposed at least partially within the crystallizer housing.

In various embodiments, the hopper screw is configured to feed PET flakes into the crystallizer. In various embodiments, the PET crystallizer is configured to feed the PET flakes into the crystallizer using the hopper screw relatively slowly.

### One or More Heating Elements

In various embodiments, the crystallizer comprises one or more heating elements for raising a temperature within the crystallizer. In particular embodiments, the one or more heating elements comprise one or more electric heating elements, one or more gas-fired heating elements, or any other suitable heating elements. In some embodiments, the one or more heating elements may be substantially electrically powered. In various embodiments, the one or more heating elements comprise one or more infra-red heating elements. In other embodiments, the one or more heating elements may utilize natural gas such, for example, propane. In particular embodiments, the one or more heating elements are configured to raise a temperature within the crystallizer to between about 37.8°C (100 degrees Fahrenheit) and about 82.2°C (180 degrees Fahrenheit). In still other embodiments, the one or more heating elements are configured to raise a temperature within the crystallizer to between about 100 degrees Celsius and 180 degrees Celsius. In some embodiments, the one or more heating elements are configured to maintain a temperature within the crystallizer that is substantially about a maximum crystallization temperature of PET. In particular embodiments, the maximum crystallization temperature of PET is between about 140 degrees Celsius and about 230 degrees Celsius.

### One or More Blowers

In various embodiments, the crystallizer further comprises one or more blowers configured to blow air over the flakes as the flakes passes through the crystallizer. In particular embodiments, the one or more blowers comprise any suitable blowers for moving air substantially across a surface area of the flakes as the flakes pass through the crystallizer. For example, in some embodiments, the one or more blowers comprise one or more suitable fans or other suitable mechanisms for moving air. In various embodiments, the one or more blowers are configured to blow air that has been at least partially heated by the one or more heating elements. In particular embodiments, the one or more blowers are configured to blow air having a temperature of at least about 60.0°C (140 degree Fahrenheit). In another particular embodiments, the one or more blowers are configured to blow air having a temperature of at least about 140 degree Celsius. In other embodiments, the one or more blowers are configured to maintain the temperature in the crystallizer between about 60.0°C (140 degrees Fahrenheit) and about 82.2°C (180 degrees Fahrenheit). In some embodiments, the one or more blowers are configured to blow hot air from a bottom portion of the crystallizer and draw air from an upper portion of the crystallizer.

### Stirring Apparatus

In various embodiments, the crystallizer comprises a stirring apparatus that comprises any suitable apparatus for stirring the PET flakes while the PET flakes are passing through the crystallizer. In various embodiments, the stirring apparatus may be operated, for example, by any suitable gear motor. In a particular embodiment, the stirring apparatus comprises a suitable rod or other suitable mechanism mounted to rotate, or otherwise stir the PET flakes as the PET flakes are passing through the crystallizer. In other embodiments, the stirring apparatus may comprise any suitable tumbler, which may, for example, comprise a drum mounted to rotate via the gear mother such that the PET flakes are at least partially stirred and/or agitated while the PET flakes are within the drum. In still other embodiments, the stirring apparatus comprises one or more screws and/or augers configured to rotate and stir the PET flakes. In particular embodiments, the stirring apparatus comprises the hopper screw.

As may be understood from this disclosure, the stirring apparatus is configured to agitate or stir the PET flakes as the one or more blowers blow air heated by the one or more heating elements across the PET flakes. In particular embodiments, the stirring apparatus is configured to at least partially reduce agglomeration (e.g., sticking or clumping of the flake) while the flake is at least partially crystallizing in the crystallizer.

In particular embodiments, the crystallizer at least partially dries the surface of the PET flakes. In various embodiments, the PET crystallizer is configured to reduce a moisture content of the PET flakes to about 50 ppm. In other embodiments the PET crystallizer is configured to reduce a moisture content of the PET flakes to between about 30 and about 50 ppm.

In various embodiments, the use of drier flakes may enable the system to run the flakes through the MRS extruder more slowly, which may allow for higher pressure within the MRS extruder during extrusion (e.g., may enable the system to maintain a higher pressure within the MRS extruder, rather than very low pressure). In various embodiments of the process, the pressure regulation system may be configured to maintain a pressure within the MRS extruder of between about 0 millibars and about 25 millibars. In particular embodiments, such as embodiments in which the PET flakes have been run through a crystallizer before being extruded in the MRS extruder, the pressure regulation system may be configured to maintain a pressure within the MRS extruder of between about 0 and about 18 millibars. In other embodiments, the pressure regulation system may be configured to maintain a pressure within the MRS extruder between about 0 and about 12 millibars. In still other embodiments, the pressure regulation system may be configured to maintain a pressure within the MRS extruder between about 0 and about 8 millibars. In still other embodiments, the pressure regulation system may be configured to maintain a pressure within the MRS extruder between about 5 millibars and about 10 millibars. In particular embodiments, the pressure regulation system may be configured to maintain a pressure within the MRS extruder at about 5 millibars, about 6 millibars, about 7 millibars, about 8 millibars, about 9 millibars, or about any suitable pressure between about 0 millibars and about 25 millibars.

In particular embodiments, the crystallizer causes the flakes to at least partially reduce in size, which may, for example, reduce a potential for the flakes to stick together. In particular embodiments, the crystallizer may particularly reduce stickiness of larger flakes, which may, for example, include flakes comprising portions of the ground PET bottles which may be thicker than other portions of the PET bottles (e.g., flakes ground from a threaded portion of the PET bottle on which a cap would typically be screwed).

### Use of Curbside Recycling v. Deposit Bottles in Process

In various embodiments, the system is configured to utilize recycled PET of varying quality in the process described above. For example, in various embodiments, the system is configured to produce bulked continuous carpet filament from PET derived from PET bottles sourced from curbside recycling sources (e.g., PET bottles that were collected as part of a general bulk recycling program or other recycling source) as well as deposit PET bottles (e.g., bottles returned as part of a deposit program). In various embodiments, Curbside recycled bottles may require more thorough processing in order to produce bulked continuous filament, as curbside recycled PET bottles may be mixed in with and otherwise include contaminants such as, for example: other recyclable goods (e.g., paper, other plastics, etc.), garbage, and other non-PET bottle items due to imperfect sorting of recycled goods or for any other reason. Deposit PET bottles may include PET bottles with fewer unwanted contaminants due in part because deposit PET bottles may be collected separately from other recyclable or disposable goods.

In various embodiments, curbside recycled PET bottles acquired during particular times of year may include more impurities and other contaminants than at other times of the year. For example, curbside recycled PET bottles collected during summer months may comprise a higher percentage of clear PET bottles (e.g., water bottles) at least in part due to additional water consumption during summer months.

In various embodiments, the system described above may be configured to adjust particular components of the process based at least in part on the source of recycled PET being used to produce the bulked continuous carpet filament. For example, because deposit PET bottles include fewer impurities that need to be removed during the initial cleaning and sorting phases of the process, the pressure regulation system may be configured to maintain a pressure within the MRS extruder that is higher than a pressure that it would be configured to maintain for PET flake derived from curbside recycled PET bottles. In a particular embodiment, the pressure regulation system may be configured to maintain a pressure within the MRS extruder of between about 0 millibars and about 12 millibars when flakes derived from deposit PET bottles are passing through the MRS extruder. In still other embodiments, the pressure regulation system may be configured to maintain a pressure within the MRS extruder of between about 5 millibars and about 10 millibars in such instances.

In various embodiments, the system is configured to determine a suitable pressure at which to maintain the pressure within the MRS extruder based at least in part on the source of the recycled PET. In other embodiments, the system is configured to omit one or more of the steps above or include one or more additional steps to the steps described above based at least in part on the source of the recycled PET.

### Process for Recycling Non-PET and Other Polymers

In various embodiments, the process described above and other processes may be used in the recycling of plastics (e.g., and other polymers) in addition to PET as described above. Further, the above process may be utilized in the ultimate production and manufacture of products other than carpeting. In various embodiments, the above process may be utilized in the recycling of, for example, polytrimethylene terephthalate (PTT), polypropylene, polyvinyl chloride (PVC), high-density polyethylene (HDPE), polystyrene (PS), expanded polystyrene (EPS), or any other suitable polymer or plastic.

According to the present invention, the BCF process described above may be utilized in recycling PTT for use in any suitable product including, for example, carpet, food containers, etc. PTT may be recycled from any suitable source such as, for example, recycled PTT carpet, recycled food containers, or other suitable PTT products. In various embodiments, the above process may be suitable for recycling of PTT due to the similar chemical composition of PTT and PET. In particular embodiments, PTT may have a higher durability and resilience than conventional polyesters (e.g., PET). In particular embodiment, PTT is particularly useful in the production of carpet due to PTT's stain resistant qualities. PTT carpets may, for example, at least generally maintain their original appearance through simple vacuuming and hot water extraction. This may, for example, result in a longer lifespan of PTT carpet. In particular embodiments, PTT is substantially hydrophobic, which may contribute to PTT carpet's stain resistance. In other embodiments PTT may be recycled into or used in the production of clothing (e.g., dry-fit clothing). In various embodiments, PTT carpeting is also substantially soft (e.g., to the touch). PTT carpet's softness may result from, for example, a lack of topically- applied chemicals for stain protection due to PTT's inherent hydrophobic tendencies. In various embodiments, the above process may be utilized to produce BCF carpet from recycled PTT.

In particular embodiments, polypropylene may be used in the production of, for example plastic parts (e.g., from toys to automobile products), carpeting, containers, paper, speakers, laboratory equipment, and any other suitable plastic applications. Polypropylene may be particularly useful, for example, in food containers due to its high melting point, where the food containers may be heated in microwaves, dishwashers, etc. In various embodiments, the process described above may be suitable for the use in recycling polypropylene products into other polypropylene products.

In various embodiments, recycled PVC may be recovered through any suitable process. In particular embodiments, recycled PVC can be used in the production of product such as, for example, hotel keycards, point of sale and other gift cards, ID badges, door hangers, table tents, luggage tags, key fops, or any other suitable products. In still other embodiments, PVC may be recycled into electrical cabling, insulation, rigid piping, vinyl records, or other products.

In particular embodiments, recycled HDPE may be utilized in the creation of products such as, for example, food containers, milk jugs, etc. In various embodiments, HDPE does not transmit chemicals into food or other products stored within containers made from HDPE, which may, for example, make HDPE suitable for use in food and other containers. Recycled HDPE may be further utilized in the production of plastic crates, plastic lumber, plastic fencing, and other products.

In various embodiments, PS (e.g., Styrofoam) may be recycled into coffee cups, plastic food boxes, plastic cutlery, packing foam, and packing peanuts. In other embodiments, recycled PS may be utilized in the production of insulation, license plate frames, rules, and other plastic products.

In particular embodiments, various steps of the above process many, for example, be determined by a type of polymer that the system is recycling. For example, the systems may extrude various types of plastic at a pressure based at least in part on the type of plastic. Various plastics and other polymers may, for example, require the process above to reduce a pressure within the MRS extruder to below about 25 mbar in order to remove sufficient contaminants to render the plastic useable in other products. Still other plastics or other polymers may require the process to reduce the pressure within the MRS extruder to below about 18 mbar during extrusion of the plastic. Still other embodiments may require the pressure regulation system to reduce the pressure in the MRS extrusion to below about 12 mbar, below about 5 mbar, or to any pressure suitable for removing sufficient impurities form the recycled polymer to render the recycled polymer useable in other products. In various embodiments, the process may, following the extrusion step, involve preparing the recycled polymer for use in one or more new products. This may include, for example, spinning the recycled polymer into one or more fibers, pelletizing the recycled polymer, or otherwise placing the recycled polymer in a suitable condition for forming the recycled polymer into a new product.

### Conclusion

Many modifications and other embodiments of the invention will come to mind to one skilled in the art to which this invention pertains having the benefit of the teachings presented in the foregoing descriptions and the associated drawings. For example, although the vacuum system discussed above is described as being configured to maintain the pressure in the open chambers of the MRS extruder to about 1 mbar, in other embodiments, the vacuum system may be adapted to maintain the pressure in the open chambers of the MRS extruder at pressures greater than, or less than, 1 mbar. For example, the vacuum system may be adapted to maintain this pressure at between about 0.5 mbar and about 12 mbar.

Similarly, although various embodiments of the systems described above may be adapted to produce carpet filament from substantially only recycled PET (so the resulting carpet filament would comprise, consist of, and/or consist essentially of recycled PET), in other embodiments, the system may be adapted to produce carpet filament from a combination of recycled PET and virgin PET. The resulting carpet filament may, for example, comprise, consist of, and/or consist essentially of between about 80% and about 100% recycled PET, and between about 0% and about 20% virgin PET.

Also, while various embodiments are discussed above in regard to producing carpet filament from PET, similar techniques may be used to produce carpet filament from other polymers. Similarly, while various embodiments are discussed above in regard to producing carpet filament from PET, similar techniques may be used to produce other products from PET or other polymers.

In addition, it should be understood that various embodiments may omit any of the steps described above or add additional steps.

In light of the above, it is to be understood that the invention is not to be limited to the specific embodiments disclosed and that modifications and other embodiments are intended to be included within the scope of the appended claims. Although specific terms are employed herein, they are used in a generic and descriptive sense only and not for the purposes of limitation.

## Claims

1. A method of recycling polytrimethylene terephthalate, said method comprising:
(A) providing a multi-screw extruder (400) that comprises:
(i) a first satellite screw extruder, said first satellite screw extruder comprising a first satellite screw (425A) that is mounted to rotate about a central axis of said first satellite screw;
(ii) a second satellite screw extruder, said second satellite screw extruder comprising a second satellite screw (425B) that is mounted to rotate about a central axis of said second satellite screw;
(iii) a third satellite screw extruder, said third satellite screw extruder comprising a third satellite screw (425C) that is mounted to rotate about a central axis of said third satellite screw;
(iv) a fourth satellite screw extruder, said fourth satellite screw extruder comprising a fourth satellite screw (425D) that is mounted to rotate about a central axis of said fourth satellite screw; and
(v) a pressure regulation system that is adapted to maintain a pressure within said first, second, third, and fourth satellite screw extruders between about 0 millibars and about 18 millibars;
(B) using said pressure regulation system to reduce a pressure within said first, second, third, and fourth satellite screw extruders to between about 0 millibars and about 18 millibars;
(C) while maintaining said pressure within said first, second, third, and fourth satellite screw extruders between about 0 millibars and about 18 millibars, passing a melt comprising recycled polytrimethylene terephthalate through said multi-screw extruder so that:
1) a first portion of said melt passes through said first satellite screw extruder,
2) a second portion of said melt passes through said second satellite screw extruder,
3) a third portion of said melt passes through said third satellite screw extruder, and
4) a fourth portion of said melt passes through said fourth satellite screw extruder; and
(D) after said step of passing said melt of recycled polytrimethylene terephthalate through said multi-screw extruder, preparing said polymer melt for use in production of one or more new products,
wherein prior to step C, said method comprises the step of providing recycled polytrimethylene terephthalate from polytrimethylene terephthalate carpets and/or polytrimethylene terephthalate food containers.

2. The method of Claim 1, wherein preparing said polymer melt for use in production of one or more new products comprises spinning said polymer melt into polytrimethylene terephthalate fiber.

3. The method of Claim 1, further comprising forming said polymer melt into bulked continuous carpet filament.

4. The method of Claim 1, wherein said method further comprises:
using said pressure regulation system to reduce said pressure within said first, second, third, and fourth satellite screw extruders to between about 0 millibars and about 5 millibars; and
while maintaining said pressure within said first, second, third, and fourth satellite screw extruders between about 0 millibars and about 5 millibars, passing said melt comprising recycled polytrimethylene terephthalate through said multi-screw extruder so that:
1) a first portion of said melt passes through said first satellite screw extruder,
2) a second portion of said melt passes through said second satellite screw extruder,
3) a third portion of said melt passes through said third satellite screw extruder, and
4) a fourth portion of said melt passes through said fourth satellite screw extruder.

5. The method of Claim 4, wherein said method further comprises:
using said pressure regulation system to reduce said pressure within said first, second, third, and fourth satellite screw extruders to between about 0 millibars and about 1.5 millibars; and
while maintaining said pressure within said first, second, third, and fourth satellite screw extruders between about 0 millibars and about 1.5 millibars, passing said melt comprising recycled polytrimethylene terephthalate through said multi-screw extruder so that:
1) a first portion of said melt passes through said first satellite screw extruder,
2) a second portion of said melt passes through said second satellite screw extruder,
3) a third portion of said melt passes through said third satellite screw extruder, and
4) a fourth portion of said melt passes through said fourth satellite screw extruder.

6. The method of Claim 1, wherein:
said multi-screw extruder further comprises:
(i) a fifth satellite screw extruder, said fifth satellite screw extruder comprising a fifth satellite screw (425E) that is mounted to rotate about a central axis of said fifth satellite screw; and
(ii) a sixth satellite screw extruder, said sixth satellite screw extruder comprising a sixth satellite screw (425F) that is mounted to rotate about a central axis of said sixth satellite screw; and
said method further comprises:
using said pressure regulation system to reduce a pressure within said fifth and sixth satellite screw extruders to between about 0 millibars and about 18 millibars; and
while maintaining said pressure within said first, second, third, fourth, fifth, and sixth satellite screw extruders between about 0 millibars and about 18 millibars, passing said melt comprising recycled polytrimethylene terephthalate through said multi-screw extruder so that:
1) a first portion of said melt passes through said first satellite screw extruder,
2) a second portion of said melt passes through said second satellite screw extruder,
3) a third portion of said melt passes through said third satellite screw extruder,
4) a fourth portion of said melt passes through said fourth satellite screw extruder,
5) a fifth portion of said melt passes through said fifth satellite screw extruder, and
6) a sixth portion of said melt passes through said sixth satellite screw extruder.

7. The method of Claim 6, wherein said method further comprises:
using said pressure regulation system to reduce said pressure within said first, second, third, fourth, fifth, and sixth satellite screw extruders to between about 0 millibars and about 12 millibars; and
while maintaining said pressure within said first, second, third, fourth, fifth, and sixth satellite screw extruders between about 0 millibars and about 12 millibars, passing said melt comprising recycled polytrimethylene terephthalate through said multi-screw extruder so that:
1) a first portion of said melt passes through said first satellite screw extruder,
2) a second portion of said melt passes through said second satellite screw extruder,
3) a third portion of said melt passes through said third satellite screw extruder,
4) a fourth portion of said melt passes through said fourth satellite screw extruder,
5) a fifth portion of said melt passes through said fifth satellite screw extruder, and
6) a sixth portion of said melt passes through said sixth satellite screw extruder.

8. The method of Claim 7, wherein said method further comprises:
using said pressure regulation system to reduce said pressure within said first, second, third, fourth, fifth, and sixth satellite screw extruders to between about 0 millibars and about 5 millibars; and
while maintaining said pressure within said first, second, third, fourth, fifth, and sixth satellite screw extruders between about 0 millibars and about 5 millibars, passing said melt comprising recycled polytrimethylene terephthalate through said multi-screw extruder so that:
1) a first portion of said melt passes through said first satellite screw extruder,
2) a second portion of said melt passes through said second satellite screw extruder,
3) a third portion of said melt passes through said third satellite screw extruder,
4) a fourth portion of said melt passes through said fourth satellite screw extruder,
5) a fifth portion of said melt passes through said fifth satellite screw extruder, and
6) a sixth portion of said melt passes through said sixth satellite screw extruder.

## Patentansprüche

1. Verfahren zum Recycling von Polytrimethylenterephthalat, wobei das Verfahren umfasst:
(A) das Bereitstellen eines mehrfach Schneckenextruders (400), der umfasst:
(i) einen ersten Satellitenschneckenextruder, wobei der oben genannte erste Satellitenschneckenextruder eine erste Satellitenschnecke (425A) umfasst, die montiert ist, um sich um eine Mittelachse der oben genannten ersten Satellitenschnecke zu drehen,
(ii) einen zweiten Satellitenschneckenextruder, wobei der oben genannte zweite Satellitenschneckenextruder eine zweite Satellitenschnecke (425B) umfasst, die montiert ist, um sich um eine Mittelachse der oben genannten zweiten Satellitenschnecke zu drehen,
(iii) einen dritten Satellitenschneckenextruder, wobei der oben genannte dritte Satellitenschneckenextruder eine dritte Satellitenschnecke (425C) umfasst, die montiert ist, um sich um eine Mittelachse der oben genannten dritten Satellitenschnecke zu drehen,
(iv) einen vierten Satellitenschneckenextruder, wobei der oben genannte vierte Satellitenschneckenextruder eine vierte Satellitenschnecke (425D) umfasst, die montiert ist, um sich um eine Mittelachse der oben genannten vierten Satellitenschnecke zu drehen, und
(v) ein Druckregelsystem, das eingerichtet ist, einen Druck innerhalb der oben genannten ersten, zweiten, dritten und vierten Satellitenschneckenextruder zwischen etwa 0 Millibar und etwa 18 Millibar aufrechtzuerhalten;
(B) das Verwenden dieses Druckregelsystems um einen Druck innerhalb der oben genannten ersten, zweiten, dritten und vierten Satellitenschneckenextruder auf etwa 0 Millibar bis etwa 18 Millibar zu reduzieren;
(C) unter Beibehaltung dieses Drucks innerhalb der oben genannten ersten, zweiten, dritten und vierten Satellitenschneckenextruder zwischen etwa 0 Millibar und etwa 18 Millibar, das Führen einer ein recyceltes Polytrimethylenterephthalat enthaltenden Schmelze durch den oben genannten Multischraubenextruder, so dass:
1) ein erster Teil der Schmelze den ersten Satellitenschneckenextruder durchläuft,
2) ein zweiter Teil der Schmelze den zweiten Satellitenschneckenextruder durchläuft,
3) ein dritter Teil der Schmelze den dritten Satellitenschneckenextruder durchläuft, und
4) ein vierter Teil der Schmelze den vierten Satellitenschneckenextruder durchläuft; und
(D) nach der oben genannten Stufe des Durchlaufens der Schmelze aus recyceltem Polytrimethylenterephthalat durch den oben genannten Schneckenextruder, das Vorbereiten der oben genannten Polymerschmelze zur Verwendung bei der Herstellung eines oder mehr neue Produkte,
wobei das Verfahren vor Stufe C die Stufe des Bereitstellens eines recycelten Polytrimethylenterephthalat aus Teppichen auf der Basis von Polytrimethylenterephthalat und/oder Lebensmittelbehältern auf der Basis von Polytrimethylenterephthalat umfasst.

2. Verfahren nach Anspruch 1, wobei das Vorbereiten der Polymerschmelze zur Verwendung bei der Herstellung eines oder mehrerer neuer Produkte die Umwandlung der oben genannten Schmelze in Fasern auf der Basis von Polytrimethylenterephthalat durch Spinnen umfasst.

3. Verfahren nach Anspruch 1, das außerdem die Verarbeitung der oben genannten Schmelze zu gebauschten Endlosfilamenten für Teppiche umfasst.

4. Verfahren nach Anspruch 1, wobei das Verfahren außerdem umfasst:
das Verwenden dieses Druckregelsystems um den oben genannten Druck innerhalb der oben genannten ersten, zweiten, dritten und vierten Satellitenschneckenextruder auf etwa 0 Millibar bis etwa 5 Millibar zu reduzieren; und
unter Beibehaltung dieses Drucks innerhalb der oben genannten ersten, zweiten, dritten und vierten Satellitenschneckenextruder zwischen etwa 0 Millibar und etwa 5 Millibar, das Führen der ein recyceltes Polytrimethylenterephthalat enthaltenden oben genannten Schmelze durch den Multischraubenextruder, so dass:
1) ein erster Teil der Schmelze den ersten Satellitenschneckenextruder durchläuft,
2) ein zweiter Teil der Schmelze den zweiten Satellitenschneckenextruder durchläuft,
3) ein dritter Teil der Schmelze den dritten Satellitenschneckenextruder durchläuft, und
4) ein vierter Teil der Schmelze den vierten Satellitenschneckenextruder durchläuft.

5. Verfahren nach Anspruch 4, wobei das Verfahren außerdem umfasst:
das Verwenden dieses Druckregelsystems um den oben genannten Druck innerhalb der oben genannten ersten, zweiten, dritten und vierten Satellitenschneckenextruder auf etwa 0 Millibar bis etwa 1,5 Millibar zu reduzieren; und
unter Beibehaltung dieses Drucks innerhalb der oben genannten ersten, zweiten, dritten und vierten Satellitenschneckenextruder zwischen etwa 0 Millibar und etwa 1,5 Millibar, das Führen der ein recyceltes Polytrimethylenterephthalat enthaltenden oben genannten Schmelze durch den Multischraubenextruder, so dass:
1) ein erster Teil der Schmelze den ersten Satellitenschneckenextruder durchläuft,
2) ein zweiter Teil der Schmelze den zweiten Satellitenschneckenextruder durchläuft,
3) ein dritter Teil der Schmelze den dritten Satellitenschneckenextruder durchläuft, und
4) ein vierter Teil der Schmelze den vierten Satellitenschneckenextruder durchläuft.

6. Verfahren nach Anspruch 1, wobei:
dieser Mehrschneckenextruder außerdem umfasst:
(i) einen fünften Satellitenschneckenextruder, wobei der oben genannte fünfte Satellitenschneckenextruder eine fünfte Satellitenschnecke (425C) umfasst, die montiert ist, um sich um eine Mittelachse der oben genannten fünften Satellitenschnecke zu drehen, und
(ii) einen sechsten Satellitenschneckenextruder, wobei der oben genannte sechste Satellitenschneckenextruder eine sechste Satellitenschnecke (425D) umfasst, die montiert ist, um sich um eine Mittelachse der oben genannten sechsten Satellitenschnecke zu drehen; und
das Verfahren außerdem umfasst:
das Verwenden dieses Druckregelsystems, um einen Druck innerhalb der oben genannten fünften und sechsten Satellitenschneckenextruder auf etwa 0 Millibar bis etwa 18 Millibar zu reduzieren; und
unter Beibehaltung dieses Drucks innerhalb der oben genannten ersten, zweiten, dritten und vierten, fünften und sechsten Satellitenschneckenextruder zwischen etwa 0 Millibar und etwa 18 Millibar, das Führen der ein recyceltes Polytrimethylenterephthalat enthaltenden oben genannten Schmelze durch den Multischraubenextruder, so dass:
1) ein erster Teil der Schmelze den ersten Satellitenschneckenextruder durchläuft,
2) ein zweiter Teil der Schmelze den zweiten Satellitenschneckenextruder durchläuft,
3) ein dritter Teil der Schmelze den dritten Satellitenschneckenextruder durchläuft,
4) ein vierter Teil der Schmelze den vierten Satellitenschneckenextruder durchläuft,
5) ein fünfter Teil der Schmelze den fünften Satellitenschneckenextruder durchläuft, und
6) ein sechster Teil der Schmelze den sechsten Satellitenschneckenextruder durchläuft.

7. Verfahren nach Anspruch 6, wobei das Verfahren außerdem umfasst:
das Verwenden dieses Druckregelsystems um den oben genannten Druck innerhalb der oben genannten ersten, zweiten, dritten, vierten, fünften und sechsten Satellitenschneckenextruder auf etwa 0 Millibar bis etwa 12 Millibar zu reduzieren; und
unter Beibehaltung dieses Drucks innerhalb der oben genannten ersten, zweiten, dritten und vierten, fünften und sechsten Satellitenschneckenextruder zwischen etwa 0 Millibar und etwa 12 Millibar, das Führen der ein recyceltes Polytrimethylenterephthalat enthaltenden oben genannten Schmelze durch den Multischraubenextruder, so dass:
1) ein erster Teil der Schmelze den ersten Satellitenschneckenextruder durchläuft,
2) ein zweiter Teil der Schmelze den zweiten Satellitenschneckenextruder durchläuft,
3) ein dritter Teil der Schmelze den dritten Satellitenschneckenextruder durchläuft,
4) ein vierter Teil der Schmelze den vierten Satellitenschneckenextruder durchläuft,
5) ein fünfter Teil der Schmelze den fünften Satellitenschneckenextruder durchläuft, und
6) ein sechster Teil der Schmelze den sechsten Satellitenschneckenextruder durchläuft.

8. Verfahren nach Anspruch 7, wobei das Verfahren außerdem umfasst:
das Verwenden dieses Druckregelsystems um den oben genannten Druck innerhalb der oben genannten ersten, zweiten, dritten, vierten, fünften und sechsten Satellitenschneckenextruder auf etwa 0 Millibar bis etwa 5 Millibar zu reduzieren; und
unter Beibehaltung dieses Drucks innerhalb der oben genannten ersten, zweiten, dritten und vierten, fünften und sechsten Satellitenschneckenextruder zwischen etwa 0 Millibar und etwa 5 Millibar, das Führen der ein recyceltes Polytrimethylenterephthalat enthaltenden oben genannten Schmelze durch den Multischraubenextruder, so dass:
1) ein erster Teil der Schmelze den ersten Satellitenschneckenextruder durchläuft,
2) ein zweiter Teil der Schmelze den zweiten Satellitenschneckenextruder durchläuft,
3) ein dritter Teil der Schmelze den dritten Satellitenschneckenextruder durchläuft,
4) ein vierter Teil der Schmelze den vierten Satellitenschneckenextruder durchläuft,
5) ein fünfter Teil der Schmelze den fünften Satellitenschneckenextruder durchläuft, und
6) ein sechster Teil der Schmelze den sechsten Satellitenschneckenextruder durchläuft.

## Revendications

1. Procédé de recyclage de polytriméthylène téréphtalate, ledit procédé comprenant le fait de :
(A) procurer une extrudeuse à multiples vis (400) qui comprend :
(i) une première extrudeuse du type à vis satellite, ladite première extrudeuse du type à vis satellite comprenant une première vis satellite (425A) qui est montée pour effectuer des rotations autour d'un axe central de ladite première vis satellite ;
(ii) une deuxième extrudeuse du type à vis satellite, ladite deuxième extrudeuse du type à vis satellite comprenant une deuxième vis satellite (425B) qui est montée pour effectuer des rotations autour d'un axe central de ladite deuxième vis satellite ;
(iii) une troisième extrudeuse du type à vis satellite, ladite troisième extrudeuse du type à vis satellite comprenant une troisième vis satellite (425C) qui est montée pour effectuer des rotations autour d'un axe central de ladite troisième vis satellite ;
(iv) une quatrième extrudeuse du type à vis satellite, ladite quatrième extrudeuse du type à vis satellite comprenant une quatrième vis satellite (425D) qui est montée pour effectuer des rotations autour d'un axe central de ladite quatrième vis satellite ; et
(v) un système de régulation de la pression qui est conçu pour maintenir une pression aux sein desdites première, deuxième, troisième et quatrième extrudeuses du type à vis satellite entre environ 0 millibar et environ 18 millibars ;
(B) utiliser ledit système de régulation de la pression pour réduire une pression au sein desdites première, deuxième, troisième et quatrième extrudeuses du type à vis satellites à une valeur entre environ 0 millibar et environ 18 millibars ;
(C) tout en maintenant ladite pression au sein desdites première, deuxième, troisième et quatrième extrudeuses du type à vis satellites entre environ 0 millibar et environ 18 millibars, faire passer une masse fondue comprenant du polytriméthylène téréphtalate recyclé à travers ladite extrudeuse à multiples vis d'une manière telle que :
1) une première portion de ladite masse fondue passe à travers ladite première extrudeuse du type à vis satellite ;
2) une deuxième portion de ladite masse fondue passe à travers ladite deuxième extrudeuse du type à vis satellite ;
3) une troisième portion de ladite masse fondue passe à travers ladite troisième extrudeuse du type à vis satellite ; et
4) une quatrième portion de ladite masse fondue passe à travers ladite quatrième extrudeuse du type à vis satellite ; et
(D) après ladite étape au cours de laquelle on fait passer ladite masse fondue de polytriméthylène téréphtalate recyclé à travers ladite extrudeuse à multiples vis, préparer ladite masse fondue polymère pour son utilisation dans la production d'un ou de plusieurs nouveaux produits ;
dans lequel, avant l'étape C, ledit procédé comprend l'étape dans laquelle on procure du polytriméthylène téréphtalate recyclé à partir de tapis à base de polytriméthylène téréphtalate et/ou de récipients alimentaires à base de polytriméthylène téréphtalate.

2. Procédé selon la revendication 1, dans lequel la préparation de ladite masse fondue polymère pour son utilisation dans la production d'un ou de plusieurs nouveaux produits comprend filer de ladite masse fondue polymère des fibres à base de polytriméthylène téréphtalate par filature.

3. Procédé selon la revendication 1, comprenant en outre la transformation de ladite masse fondue polymère en filaments continus gonflants pour moquettes.

4. Procédé selon la revendication 1, dans lequel ledit procédé comprend en outre le fait de :
utiliser ledit système de régulation de la pression pour réduire ladite pression au sein desdites première, deuxième, troisième et quatrième extrudeuses du type à vis satellites à une valeur entre environ 0 millibar et environ 5 millibars ; et
tout en maintenant ladite pression au sein desdites première, deuxième, troisième et quatrième extrudeuses du type à vis satellites entre environ 0 millibar et environ 5 millibars, faire passer ladite masse fondue comprenant du polytriméthylène téréphtalate recyclé à travers ladite extrudeuse à multiples vis d'une manière telle que :
1) une première portion de ladite masse fondue passe à travers ladite première extrudeuse du type à vis satellite ;
2) une deuxième portion de ladite masse fondue passe à travers ladite deuxième extrudeuse du type à vis satellite ;
3) une troisième portion de ladite masse fondue passe à travers ladite troisième extrudeuse du type à vis satellite ; et
4) une quatrième portion de ladite masse fondue passe à travers ladite quatrième extrudeuse du type à vis satellite.

5. Procédé selon la revendication 4, dans lequel ledit procédé comprend en outre le fait de :
utiliser ledit système de régulation de la pression pour réduire ladite pression au sein desdites première, deuxième, troisième et quatrième extrudeuses du type à vis satellites à une valeur entre environ 0 millibar et environ 1,5 millibar; et
tout en maintenant ladite pression au sein desdites première, deuxième, troisième et quatrième extrudeuses du type à vis satellites entre environ 0 millibar et environ 1,5 millibar, faire passer ladite masse fondue comprenant du polytriméthylène téréphtalate recyclé à travers ladite extrudeuse à multiples vis d'une manière telle que :
1) une première portion de ladite masse fondue passe à travers ladite première extrudeuse du type à vis satellite ;
2) une deuxième portion de ladite masse fondue passe à travers ladite deuxième extrudeuse du type à vis satellite ;
3) une troisième portion de ladite masse fondue passe à travers ladite troisième extrudeuse du type à vis satellite ; et
4) une quatrième portion de ladite masse fondue passe à travers ladite quatrième extrudeuse du type à vis satellite.

6. Procédé selon la revendication 1, dans lequel :
ladite extrudeuse à multiples vis comprend en outre le fait de :
(i) une cinquième extrudeuse du type à vis satellite, ladite cinquième extrudeuse du type à vis satellite comprenant une cinquième vis satellite (425E) qui est montée pour effectuer des rotations autour d'un axe central de ladite cinquième vis satellite ;
(ii) une sixième extrudeuse du type à vis satellite, ladite sixième extrudeuse du type à vis satellite comprenant une deuxième vis satellite (425F) qui est montée pour effectuer des rotations autour d'un axe central de ladite sixième vis satellite ; et
ledit procédé comprend en outre le fait de :
utiliser ledit système de régulation de la pression pour réduire une pression au sein desdites cinquième et sixième extrudeuses du type à vis satellites à une valeur entre environ 0 millibar et environ 18 millibars ; et
tout en maintenant ladite pression au sein desdites première, deuxième, troisième, quatrième, cinquième et sixième extrudeuses du type à vis satellites entre environ 0 millibar et environ 18 millibars, faire passer ladite masse fondue comprenant du polytriméthylène téréphtalate recyclé à travers ladite extrudeuse à multiples vis d'une manière telle que :
1) une première portion de ladite masse fondue passe à travers ladite première extrudeuse du type à vis satellite ;
2) une deuxième portion de ladite masse fondue passe à travers ladite deuxième extrudeuse du type à vis satellite ;
3) une troisième portion de ladite masse fondue passe à travers ladite troisième extrudeuse du type à vis satellite ; et
4) une quatrième portion de ladite masse fondue passe à travers ladite quatrième extrudeuse du type à vis satellite ;
5) une cinquième portion de ladite masse fondue passe à travers ladite cinquième extrudeuse du type à vis satellite ; et
6) une sixième portion de ladite masse fondue passe à travers ladite sixième extrudeuse du type à vis satellite.

7. Procédé selon la revendication 6, dans lequel ledit procédé comprend en outre le fait de :
utiliser ledit système de régulation de la pression pour réduire ladite pression au sein desdites première, deuxième, troisième, quatrième, cinquième et sixième extrudeuses du type à vis satellites à une valeur entre environ 0 millibar et environ 12 millibars ; et
tout en maintenant ladite pression au sein desdites première, deuxième, troisième, quatrième, cinquième et sixième extrudeuses du type à vis satellites entre environ 0 millibar et environ 12 millibars, faire passer ladite masse fondue comprenant du polytriméthylène téréphtalate recyclé à travers ladite extrudeuse à multiples vis d'une manière telle que :
1) une première portion de ladite masse fondue passe à travers ladite première extrudeuse du type à vis satellite ;
2) une deuxième portion de ladite masse fondue passe à travers ladite deuxième extrudeuse du type à vis satellite ;
3) une troisième portion de ladite masse fondue passe à travers ladite troisième extrudeuse du type à vis satellite ; et
4) une quatrième portion de ladite masse fondue passe à travers ladite quatrième extrudeuse du type à vis satellite ;
5) une cinquième portion de ladite masse fondue passe à travers ladite cinquième extrudeuse du type à vis satellite ; et
6) une sixième portion de ladite masse fondue passe à travers ladite sixième extrudeuse du type à vis satellite.

8. Procédé selon la revendication 7, dans lequel ledit procédé comprend en outre le fait de :
utiliser ledit système de régulation de la pression pour réduire ladite pression au sein desdites première, deuxième, troisième, quatrième, cinquième et sixième extrudeuses du type à vis satellites à une valeur entre environ 0 millibar et environ 5 millibars ; et
tout en maintenant ladite pression au sein desdites première, deuxième, troisième, quatrième, cinquième et sixième extrudeuses du type à vis satellites entre environ 0 millibar et environ 5 millibars, faire passer ladite masse fondue comprenant du polytriméthylène téréphtalate recyclé à travers ladite extrudeuse à multiples vis d'une manière telle que :
1) une première portion de ladite masse fondue passe à travers ladite première extrudeuse du type à vis satellite ;
2) une deuxième portion de ladite masse fondue passe à travers ladite deuxième extrudeuse du type à vis satellite ;
3) une troisième portion de ladite masse fondue passe à travers ladite troisième extrudeuse du type à vis satellite ; et
4) une quatrième portion de ladite masse fondue passe à travers ladite quatrième extrudeuse du type à vis satellite ;
5) une cinquième portion de ladite masse fondue passe à travers ladite cinquième extrudeuse du type à vis satellite ; et
6) une sixième portion de ladite masse fondue passe à travers ladite sixième extrudeuse du type à vis satellite.
